# EUROPÄISCHE PATENTSCHRIFT

(11) **EP 4 023 040 B1**
(45) Veröffentlichungstag und Bekanntmachung des Hinweises auf die Patenterteilung: **28.06.2023**
(21) Anmeldenummer: 22159064.9
(22) Anmeldetag: 19.05.2020
(51) Int. Cl.: A01B 15/20, A01B 3/42, A01B 15/14

(54) **PFLUG MIT KOMBINIERTEM EINSTELLZENTRUM FUER ARBEITSBREITE UND VORDERFURCHENBREITE**
PLOUGH WITH COMBINED ADJUSTING DEVICE FOR WORKING WIDTH AND FORWARD FURROW WIDTH
CHARRUE POURVUE DE DISPOSITIF DE RÉGLAGE COMBINÉ POUR LA LARGEUR DE TRAVAIL ET LA LARGEUR DE LA PREMIÈRE RAIE

(30) Priorität: 20.06.2019 DE 102019116732
(43) Veröffentlichungstag der Anmeldung: 06.07.2022
(62) Teilanmeldung aus: 20401032.6
(73) Patentinhaber: Amazonen-Werke H. Dreyer SE & Co. KG, 49205 Hasbergen (DE)
(72) Erfinder: REHNEN, Pascal, 49328 Melle (DE); WILKEN, Martin, 26131 Oldenburg (DE); PRANGEMEIER, Dominik, 49549 Ladbergen (DE)

(56) Entgegenhaltungen:
- EP-A1- 0 304 835
- EP-A1- 2 659 758
- CN-A- 109 287 142
- DE-C1- 19 608 140
- DE-U1- 7 830 864
- GB-A- 2 182 831

## Beschreibung

Die Erfindung betrifft einen Pflug gemäß dem Oberbegriff des Patentanspruches 1.

Ein derartiger Pflug ist in DE 196 08 140 C1 beschrieben.

Ein weiterer Pflug ist in DE 85 32 548 U1 beschrieben. Dieser Pflug weist an seinem vorderen Ende einen Anbaubock zum Anbau an einer landwirtschaftlichen Zugmaschine, wie einem Ackerschlepper, auf. Der Anbaubock umfasst üblicherweise geeignete Kopplungsstellen, um den Pflug in einer Dreipunkthydraulik der Zugmaschine anzuordnen. Ferner umfasst der Pflug einen an dem Anbaubock mittels eines Viergelenks angeordneten Pflugrahmen mit daran schwenkbar angeordneten Pflugkörpern. Das Viergelenk ist hierbei als Einstellzentrum ausgebildet, so dass der Pflugrahmen gegenüber dem Anbaubock verstellbar ist.

Die Pflugkörper sind mit einer Verstellstange verbunden. Die Verstellstange ist dazu vorgesehen, die Pflugkörper gemeinsam gegenüber dem Pflugrahmen bzw. der Zugmaschine in einstellbarer Weise zu verschwenken.

Das Viergelenk besteht bei diesem Pflug aus einem mit dem Anbaubock starr verbundenen, als Wendekonsole ausgeführten Basislenker, einem der Wendekonsole gegenüberliegend angeordnetem als Steuerhebel ausgeführten Zentrallenker, einem jeweils mit einem Gelenk zwischen der Wendekonsole und dem Steuerhebel angeordneten als Tragschwinge ausgeführten Hauptlenker und einem der Tragschwinge gegenüberliegenden, jeweils mit einem Gelenk zwischen der Wendekonsole und dem Steuerhebel angeordneten und als Stabilisator ausgeführten Nebenlenker. Der Pflugrahmen ist hierbei über das Gelenk zwischen der Tragschwinge und dem Steuerhebel an dem Viergelenk angelenkt.

Zwischen dem vorderen Ende der Tragschwinge und dem Pflugrahmen greift ein längeneinstellbarer Lenker zur Einstellung der Vorderfurchenbreite bzw.

Erstkörperschnittbreite am Viergelenk an. Durch eine Längenveränderung des Lenkers wird der Pflugrahmen derart gegenüber dem Viergelenk gezogen, bei einer Verkürzung, bzw. geschoben, bei einer Verlängerung, dass sich die Vorderfurchenbreite anpasst. Nachteilig ist hierbei, dass zwischen dem Pflugrahmen und der Tragschwinge, insbesondere bei Einstellung des Pflugs auf eine kleine Spurbreite der Zugmaschine, der Bauraum sehr beschränkt ist. Um den Pflug auf eine sehr geringe Spurbreite einzustellen kann es notwendig sein, dass der Pflugrahmen nahezu parallel zur Tragschwinge auszurichten ist. Diese Anpassung des Pflugs ist durch die Anordnung des Lenkers zwischen Pflugrahmen und Tragschwinge verhindert, so dass die Einstellmöglichkeiten des Pflugs, insbesondere auf kleine Schlepper-Spurbreiten, eingeschränkt sind.

Ferner ist zwischen dem dem Pflugrahmen mit dem Viergelenk verbindenden Gelenk abgewandten Ende des Steuerhebels und dem hinteren Teil des Pflugrahmens ein als Arbeitsbreiteneinstellmittel ausgebildetes längeneinstellbares Stellglied am Viergelenk angeordnet. Diese Arbeitsbreiteneinstellmittel sind anhand des am Viergelenk angreifenden Lenkers mit den Vorderfurchenbreiteneinstellmitteln gekoppelt verbunden, so dass der Pflug mit einem kombinierten Einstellzentrum geschaffen ist. Bei einer Veränderung der Arbeitsbreite durch das längeneinstellbare Stellglied wird der Pflugrahmen um das Gelenk am Viergelenk, insbesondere quer zur Fahrtrichtung, verschwenkt. Die Vorderfurchenbreite passt sich automatisch der veränderten Arbeitsbreite an, da der Pflugrahmen mittels des Lenkers nachgezogen bzw. nachgeschoben wird. Der Pflugrahmen führt folglich eine Nachstellung zur Anpassung der Vorderfurchenbreite an eine veränderte Arbeitsbreite aus.

Nachteilig ist neben den aufgrund des mangelnden Bauraums zwischen Tragschwinge und Pflugrahmen beschränkten Einstellmöglichkeiten, dass der Pflugrahmen dieses Pflugs über den am Viergelenk angreifenden Lenker an seinem vorderen Ende mit dem Viergelenk verbunden ist. Und zwar ergibt sich durch diese Bindung zwischen Pflugrahmen und Viergelenk eine Kinematik, welche die Führung des Pflugs erschwert, da die Bewegungsmöglichkeiten des Pflugrahmens gegenüber dem Viergelenk durch den Lenker eingeschränkt sind.

Die Aufgabe der Erfindung besteht folglich darin einen Pflug mit einem verbesserten Einstellzentrum zu schaffen, welches eine verbesserte Kinematik für mehr Bauraumfreiheit und eine verbesserte Pflugführung aufweist.

Diese Aufgabe wird erfindungsgemäß durch einen Pflug mit den Merkmalen des Anspruchs 1 gelöst. Es ist vorgesehen, dass der Lenker innerhalb des Viergelenks zwischen dem Steuerhebel einerseits und der Tragschwinge oder dem Stabilisator andererseits, die Ausrichtung des Viergelenks, insbesondere eine Diagonale des Viergelenks, beeinflussend angeordnet ist.

Infolge dieser Maßnahme ist der Lenker so angeordnet, dass das Viergelenk gestreckt, das heißt die Diagonale wird verlängert, bzw. gestaucht, das heißt die Diagonale wird verkürzt, wird. In vorteilhafter Weise ist der Bauraum zwischen dem Pflugrahmen und der Tragschwinge somit freigegeben und das Einstellzentrum ist so geschaffen, dass der Pflugrahmen bei Verschwenkung im Wesentlichen eine Drehbewegung ausführt. Die Verbindung der Pflugkörper über die Verstellstange bewirkt bei einer Drehbewegung des Pflugrahmens, dass die Pflugkörper so verstellt werden, dass sie zumindest annährend in Fahrtrichtung ausgerichtet sind, das heißt ihre Anlagefläche annährend parallel zur Fahrtrichtung liegt bzw. ihr Anlagewinkel zwischen Anlagefläche und einer Achse durch beide Unterlenker zumindest annährend 90 Grad beträgt. Das Einstellzentrum ermöglicht somit verbesserte Einstellmöglichkeiten des Pflugs, da der entsprechende Bauraum freigegeben ist. Ferner zeichnet sich der Pflug durch einen verfeinerten Bewegungsablauf aus, welcher die Pflugführung zusätzlich erleichtert. Vorzugsweise ist der Lenker gelenkig innerhalb des Viergelenks angeordnet.

In einer vorteilhaften Weiterbildung des Pflugs ist vorgesehen, dass der Lenker als Spannschloss ausgeführt ist. Die Länge des Lenkers lässt sich somit in besonders einfacher Weise einstellen. Vorteilhaft ist weiter, dass der als Spannschloss ausgeführte Lenker besonders stabil und zuverlässig ist. Vorzugsweise ist das Spannschloss zur Übertragung von Zug- und Druckkräften eingerichtet, so dass die Ausrichtung des Viergelenks in beiden Richtungen durch den Lenker beeinflussbar, das heißt einstellbar, ist. Durch Betätigung des Spannschlosses lässt sich so in vortrefflich einfacher Weise die Vorderfurchenbreite bzw. Erstkörperschnittbreite einstellen.

Erfindungsgemäß ist der Lenker einerseits an der Tragschwinge angeordnet und andererseits über einen Kniehebel mit dem Steuerhebel und dem Pflugrahmen verbunden. Vorzugsweise umfasst der Kniehebel ein den Lenker schwenkbar mit dem Steuerhebel verbindendes Verbindungsstück, sowie einen das Verbindungsstück gelenkig mit dem Pflugrahmen verbindenden Zug-Druck-Stab, wobei der Lenker, das Verbindungsstück und der Zug-Druck-Stab jeweils gelenkig miteinander verbunden sind. Infolge dieser Maßnahme sind die Vorderfurchenbreiteneinstellmittel, also der mit dem Viergelenk zusammenwirkende Lenker, derart über den Pflugrahmen mit den Arbeitsbreiteneinstellmitteln, also dem längeneinstellbaren Stellglied zwischen Steuerhebel und Pflugrahmen, gekoppelt, dass durch Beeinflussung der Ausrichtung des Viergelenks, insbesondere der Diagonale des Viergelenks, über den mit dem Lenker zusammenwirkenden Kniehebel die Vorderfurchenbreite bzw. Erstkörperschnittbreite automatisch an eine veränderte Arbeitsbreite angepasst wird. Der Pflug ist folglich durch diese Weiterbildung mit einer weiter verbesserten Kinematik für das kombinierte Einstellzentrum geschaffen.

In einer weiteren vorteilhaften Weiterbildung des Pflugs ist vorgesehen, dass der Lenker als Hydraulikzylinder ausgeführt ist. Die Länge des Lenkers lässt sich somit fernsteuerbar einstellen. Vorzugsweise ist der als Hydraulikzylinder ausgeführte Lenker mit einer Hydraulikanlage einer Zugmaschine koppelbar und so mit Hydraulikfluid beaufschlagbar. Der Hydraulikzylinder weist eine Kolbenseite und eine Stangenseite auf. Vorzugsweise ist die Zylinderkammer auf der Kolbenseite des Hydraulikzylinders an der Tragschwinge gelenkig angeordnet und die Kolbenstange auf der Stangenseite des Zylinders gelenkig mit dem Steuerhebel verbunden.

In einer weiteren besonders vorteilhaften Weiterbildung des Pflugs ist das Stellglied ebenfalls als Hydraulikzylinder ausgeführt, wobei das Stellglied durch eine hydraulische Koppelungsvorrichtung zur automatischen Anpassung der Vorderfurchenbreiteneinstellmittel, also des mit dem Viergelenk zusammenwirkenden längeneinstellbaren Lenkers, bei der Betätigung der Arbeitsbreiteneinstellmittel mit dem Lenker verbunden ist. Das Einstellzentrum ist infolge dieser Weiterbildung mit einer besonders einfachen Kombination der Arbeitsbreiteneinstellmittel mit den Vorderfurchenbreiteneinstellmittel geschaffen. Vorzugsweise wird mittels der hydraulischen Koppelungsvorrichtung der Lenker zumindest teilweise mit von dem Stellglied verdrängten Hydraulikfluid beaufschlagt. Die hydraulische Koppelungseinrichtung kann insbesondere eine Hydraulikleitung, zumindest ein Wegeventil, zumindest eine Drossel und/oder zumindest ein Druckbegrenzungsventil umfassen.

In einer weiteren besonders bevorzugten Ausführungsform des Pflugs ist vorgesehen, dass die Koppelungsvorrichtung eine Master-Slave-Anordnung umfasst, wobei der Lenker eine Druckmittelkammer umfasst, die von aus dem Stellglied verdrängtem Hydraulikfluid beaufschlagbar ist. Die im Wesentlichen durch das längeneinstellbare Stellglied gebildeten Arbeitsbreiteneinstellmittel sind in dieser Ausführungsform als Master der Koppelungsvorrichtung ausgeführt. Die im Wesentlichen als längeneinstellbarer Lenker ausgeführten Vorderfurchenbreiteneinstellmittel sind in dieser Ausführungsform dementsprechend als Slave der Koppelungsvorrichtung ausgeführt, so dass sich die Vorderfurchenbreiteneinstellmittel automatisch einer veränderten Einstellung der Arbeitsbreiteneinstellmittel anpassen. Alternativ oder zusätzlich ist denkbar, dass die Koppelungsvorrichtung ein elektronisches Wegmesssystem umfasst, wobei der Lenker und/oder das Stellglied anhand von dem Wegmesssystem detektierter Messwerte den Lenker und/oder das Stellglied betreffend ansteuerbar sind.

Der erfindungsgemäße Pflug ist ferner vorteilhaft dadurch weitergebildet, dass die Vorderfurchenbreiteneinstellmittel, insbesondere mittels eines, vorzugsweise von der Koppelungsvorrichtung separaten, Schaltventils, unabhängig von den Arbeitsbreiteneinstellmitteln betätigbar sind. In vorteilhafter Weise ist es einem Benutzer der Pflugs somit erlaubt eine gewünschte Vorderfurchenbreite bzw. Erstkörperschnittbreite ungeachtet der gewünschten Arbeitsbreite einzustellen.

Dies ist besonders vorteilhaft, um den Pflug initial, also vor Arbeitsbeginn, an die Zugmaschine anzupassen, ohne dabei die gewünschte Arbeitsbreite zu verstellen.

Damit die Pflugkörper jederzeit optimal zur Fahrtrichtung ausgerichtet sind, ist vorgesehen, dass die Verstellstange und der Steuerhebel durch eine Strebe verbunden sind, wobei die Strebe so eine gemeinsame Verschwenkung der Pflugkörper bei Betätigung der Arbeitsbreiteneinstellm ittel und/oder Vorderfurchenbreiteneinstellmittel über die Verstellstange bewirkend ausgebildet ist. Da der Pflugrahmen bei Betätigung der Arbeitsbreiteneinstellmittel und/oder Vorderfurchenbreiteneinstellmittel im Wesentlichen eine Drehbewegung ausführt, ist infolge dieser Weiterbildung erreicht, dass die Anlage der Pflugkörper zumindest annährend jederzeit annährend in Fahrtrichtung ausgerichtet ist. Der Anlagewinkel der Pflugkörper, eingeschlossen zwischen der Anlagefläche eines Pflugkörpers und einer Achse, die durch beide Unterlenker verläuft, wird somit zumindest annährend konstant gehalten, so dass nahezu keine zusätzlichen Seitenkräfte in den Pflug eingeleitet werden.

Um den Anlagewinkel der Pflugkörper erstmalig einzustellen, ist in einer weiteren vorteilhaften Weiterbildung vorgesehen, dass die Strebe längeneinstellbar ausgeführt ist. Die Strebe kann als Spannschloss ausgeführt sein.

Weitere Einzelheiten der Erfindung sind der Beispielsbeschreibung und den Zeichnungen zu entnehmen. Die Zeichnungen zeigen
Fig. 1 eine erste Ausführungsform eines erfindungsgemäßen Pflugs in schematischer Draufsicht,
Fig.2 der Pflug gemäß Fig. 1 mit vergrößerter Arbeitsbreite,
Fig.3 eine zweite Ausführungsform eines erfindungsgemäßen Pflugs in schematischer Draufsicht, und
Fig.4 der Pflug gemäß Fig.3 mit vergrößerter Arbeitsbreite.

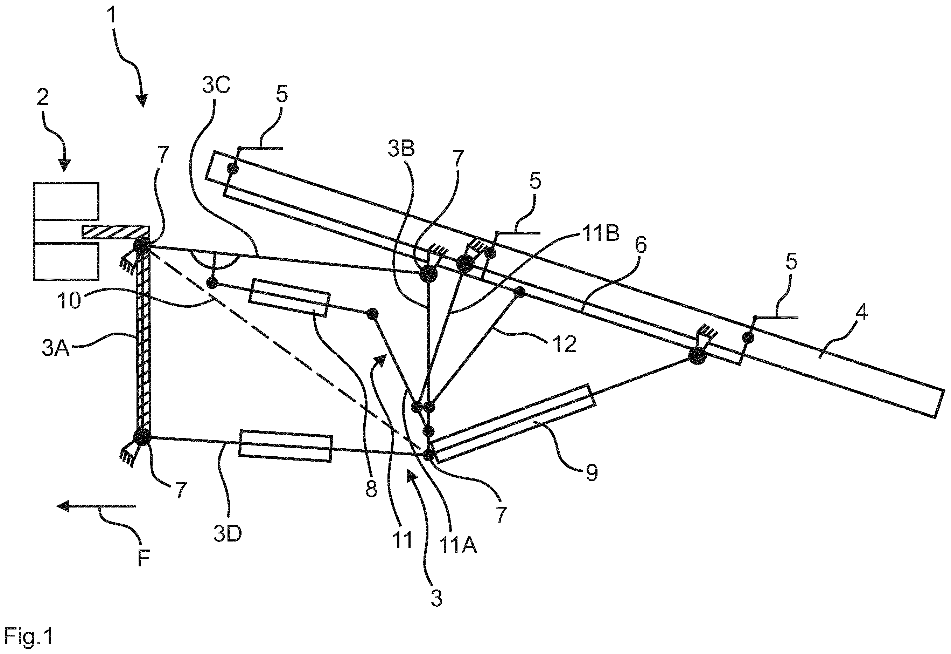

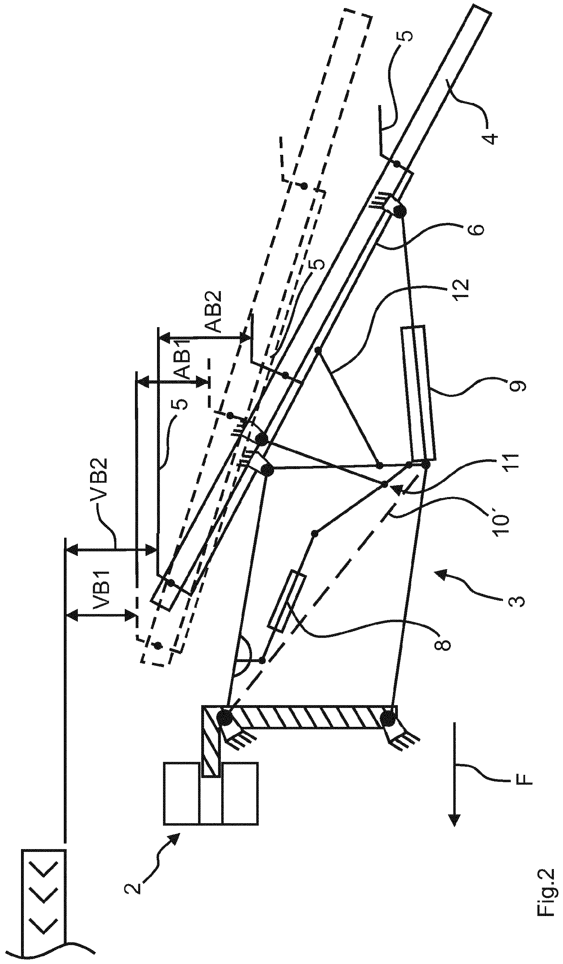

Eine erste Ausführungsform eines Pflugs 1 ist in Fig.1, 2 in schematischer Draufsicht zu sehen. Der Pflug 1 ist als Anbaudrehpflug ausgeführt und weist an seinem in Fahrtrichtung F vorderen Ende einen Anbaubock 2 zum Anbau an einer nicht gezeigten Zugmaschine auf. Der Pflug 1 umfasst ferner einen Pflugrahmen 4, welcher über ein als Viergelenk 3 ausgebildetes Einstellzentrum an dem Anbaubock 2 angeordnet ist. An dem Pflugrahmen 4 sind eine Mehrzahl Pflugkörper 5 schwenkbar angeordnet. Zur gemeinsamen einstellbaren Verschwenkung der Pflugkörper 5 ist eine Verstellstange 6 vorgesehen, welche die Pflugkörper 5 verbindet. Durch Verschiebung der Verstellstange 6 lassen sich die Pflugkörper 5 gemeinsam gegenüber dem Pflugrahmen 4 verschwenken bzw. in Fahrtrichtung F ausrichten. Der Pflugrahmen 4 ist mittels des Viergelenks 3 verstellbar, das heißt zur Einstellung von Vorderfurchenbreite und/oder Arbeitsbreite verschwenkbar, gegenüber dem Anbaubock 2 bzw. der nicht dargestellten Zugmaschine angeordnet.

Das Viergelenk 3 ist gebildet aus einer drehbar mit dem Anbaubock 2 verbundenen Wendekonsole 3A, einem der Wendekonsole 3A gegenüberliegend angeordnetem Steuerhebel 3B, einer jeweils mit einem Gelenk 7 zwischen der Wendekonsole 3A und dem Steuerhebel 3B angeordneten Tragschwinge 3C und einem jeweils mit einem Gelenk 7 zwischen der Wendekonsole 3A und dem Steuerhebel 3B angeordneten Stabilisator 3D. Die Wendekonsole 3A, der Steuerhebel 3B, die Tragschwinge 3C und der Stabilisator 3D sind also jeweils untereinander gelenkig verbunden, so dass das Viergelenk 3 sich strecken und stauchen lässt. Der Pflugrahmen 4 ist über das die Tragschwinge 3C mit dem Steuerhebel 3B verbindende Gelenk 7 an dem Viergelenk 3 angelenkt, welches insofern als Zentralgelenk 7 bezeichnet werden kann.

Der Pflug 1 ist als Anbaudrehpflug ausgebildet, das heißt der Pflugrahmen 4 kann mittels der drehbaren Befestigung der Wendekonsole 3A am Anbaubock 2 um eine in Fahrtrichtung F liegende Achse um 180 Grad gewendet werden. Hierzu kann zwischen dem Anbaubock 2 und der Wendekonsole 3A ein nicht dargestellter Aktor vorgesehen sein, welcher auf Ansteuerung den Wendevorgang des Pflugrahmens 4 bewirkend ausgebildet ist. In vorteilhafter Weise ist der Stabilisator 3D als längeneinstellbarer Schwenkzylinder ausgeführt. Um mehr Bodenfreiheit für den Pflugrahmen 4 im Falle eines Wendevorgangs zu erlangen, kann der Stabilisator 3D in seiner Länge verstellt werden, so dass Viergelenkt 3 verstellt und somit der Pflugrahmen 4 verschwenkt wird.

Zur Einstellung der Vorderfurchenbreite VB1, VB2, also der Schnittbreite des in Fahrtrichtung F vordersten Pflugkörpers 5, umfasst der Pflug 1 einen längeneinstellbaren Lenker 8. Der Lenker 8 ist innerhalb des Viergelenks 3 zwischen dem Steuerhebel 3B und der Tragschwinge 3C angeordnet, so dass die Ausrichtung des Viergelenks 3, insbesondere eine Diagonale 10 des Viergelenks 3, durch den Lenker 8 beeinflussbar ist. Alternativ kann der Lenker 8 zwischen dem Steuerhebel 3B einerseits und dem Stabilisator 3D andererseits angeordnet sein. Durch Strecken bzw. Stauchen des Viergelenks 3, also Verlängern bzw. Verkürzen der Diagonalen 10 des Viergelenks 3, mittels des Lenkers 8 wird der Pflugrahmen 4 gegenüber dem Anbaubock 2 verschwenkt, so dass die gewünschte Vorderfurchenbreite VB1, VB2 eingestellt wird. Ferner umfasst der Pflug 1 ein zwischen dem Steuerhebel 3B und dem in Fahrtrichtung F hinteren Ende des Pflugrahmens 4 angeordnetes längeneinstellbares Stellglied 9. Das Stellglied 9 dient als Arbeitsbreiteneinstellmittel indem es durch Längenänderung dazu eingerichtet ist, den Pflugrahmen 4 im Wesentlichen um das Zentralgelenk 7 zwischen Tragschwinge 3C und Steuerhebel 3B zu verschwenken, so dass sich zwischen zwei Pflugkörpern 5 die gewünschte Arbeitsbreite AB1, AB2 einstellt. Als Arbeitsbreite AB1, AB2 wird der Abstand quer zur Fahrtrichtung F zwischen den Anlagen zweier aufeinanderfolgender Pflugkörper 5 bezeichnet. Über das Viergelenk 3 sind diese Arbeitsbreiteneinstellmittel schließlich mit den Vorderfurchenbreiteneinstellmitteln verbunden, so dass der Pflug 1 mit einem kombinierten Einstellzentrum geschaffen ist.

Wie in Fig.1 und 2 zu sehen ist, ist der Lenker 8 in dieser ersten Ausführungsform als Spannschloss ausgeführt. Ferner ist der Lenker 8 einerseits an der Tragschwinge 3C angeordnet und andererseits über einen Kniehebel 11 mit dem Steuerhebel 3B und dem Pflugrahmen 4 verbunden. Der Kniehebel 11 umfasst ein den Lenker 8 schwenkbar mit dem Steuerhebel 3B verbindendes Verbindungsstück 11A, sowie einen das Verbindungsstück 11A gelenkig mit dem Pflugrahmen 4 verbindenden Zug-Druck-Stab 11B, wobei der Lenker 8, das Verbindungsstück 11A und der Zug-Druck-Stab 11B jeweils gelenkig miteinander verbunden sind.

Diese Anbindung des Lenkers 8 über den Kniehebel 11 an den Pflugrahmen 4 bewirkt, dass bei Betätigung der Arbeitsbreiteneinstellmittel, also des Stellgliedes 9, die Vorderfurchenbreite VB1, VB2 automatisch in verbesserter Art und Weise mit angepasst wird: Der Pflugrahmen 4 wird durch Betätigung des Stellgliedes 9 verschwenkt, wobei diese Verschwenkung sich über den Zug-Druck-Stab 11B und weiter das Verbindungsstück 11A, also den Kniehebel 11, ebenfalls auf den Lenker 8 auswirkt. Durch angepasste Längenverhältnisse von Stellglied 9, Kniehebel 11 und mit dem Viergelenk 3 zusammenwirkendem Lenker 8 wird erreicht, dass die Ausrichtung des Viergelenks infolge der Betätigung des Stellgliedes 9 durch den Lenker 8 derart gestreckt bzw. gestaucht wird, dass sich die Vorderfurchenbreite VB2 in geeigneter Weise der veränderten Arbeitsbreite AB2 anpasst.

In Fig.2 ist der Pflug 1 mit einer vergrößerten Arbeitsbreite AB2 in Volllinien zu sehen, wobei der Pflug 1 gemäß Fig.1 mit verringerter Arbeitsbreite AB1 zum Vergleich in strichlierten Linien dargestellt ist. Durch Betätigung, in diesem Fall Verkürzen, des Stellgliedes 9 wird der Pflugrahmen 4 verschwenkt. Die Pflugkörper 5 sind über eine mit der Verstellstange 6 verbundene Strebe 12 an das Viergelenk 3, genauer an den Steuerhebel 3B, gekoppelt. Die Pflugkörper 5 werden somit bei Betätigung der Arbeitsbreiteneinstellmittel und/oder Vorderfurchenbreiteneinstellmittel über die mit der Verstellstange 6 zusammenwirkende Strebe 12 am Pflugrahmen 4 verschwenkt, so dass sie ihre Ausrichtung zumindest annährend in Fahrtrichtung F nahezu beibehalten. Die Strebe 12 kann hierbei als Spannschloss ausgeführt sein, um die Ausrichtung der Pflugkörper 5 zum Pflugrahmen 4 initial einzustellen.

Der Pflug 1 weist in der in Fig.2 in Volllinien dargestellten Position, mit gegenüber Fig.1 verschwenktem Pflugrahmen 4, eine größere Arbeitsbreite AB2 auf als der in Strichlinien dargestellte Pflug 1 gemäß Fig.1 mit der Arbeitsbreite AB1. Die Verschwenkung des Pflugrahmens 4, hervorgerufen durch die Betätigung des Stellgliedes 9, bewirkt neben dem Kippen des Viergelenks 3 gegenüber dem Anbaubock 2 nach unten außerdem, dass das Viergelenk 3 mittels des mit dem Kniehebel 11 zusammenwirkenden Lenkers 8 gestreckt wird. Die Diagonale 10` des in Volllinien dargestellten Pflugs 1 mit vergrößerter Arbeitsbreite AB2 ist also verlängert gegenüber der Diagonale 10 des Pflugs 1 mit verringerter Arbeitsbreite AB1, dargestellt in Fig.1 bzw. strichlierten Linien in Fig.2. Diese veränderte Ausrichtung des Viergelenks 3 bewirkt, dass die Vorderfurchenbreite VB2 automatisch der vergrößerten Arbeitsbreite AB2 angepasst, das heißt gegenüber der Vorderfurchenbreite VB1 gemäß dem Pflug 1 aus Fig.1 vergrößert, ist.

Der Pflug 1 lässt sich in seiner ersten Ausführungsform folglich aus der in Fig.1 dargestellten Position verringerter Arbeitsbreite AB1 und Vorderfurchenbreite VB1 in die in Fig.2 abgebildete Position vergrößerter Arbeitsbreite AB2 und Vorderfurchenbreite VB2 verbringen, indem das als Stellglied 9 ausgeführte Arbeitsbreiteneinstellmittel betätigt wird. Die Vorderfurchenbreite VB2 passt sich der im Wesentlichen durch Verschwenkung des Pflugrahmens 4 hervorgerufenen vergrößerten Arbeitsbreite AB2 an, indem die Ausrichtung des Viergelenks 3 mittels des Lenkers 8 beeinflusst wird. Die als längeneinstellbarer Lenker 8, in Form eines Spannschlosses, ausgeführten Vorderfurchenbreiteneinstellmittel sind hierbei unabhängig von den Arbeitsbreiteneinstellmitteln betätigbar, um die Vorderfurchenbreite VB1, VB2 unabhängig von der Arbeitsbreite AB1, AB2, vorzugsweise vorab, einzustellen.

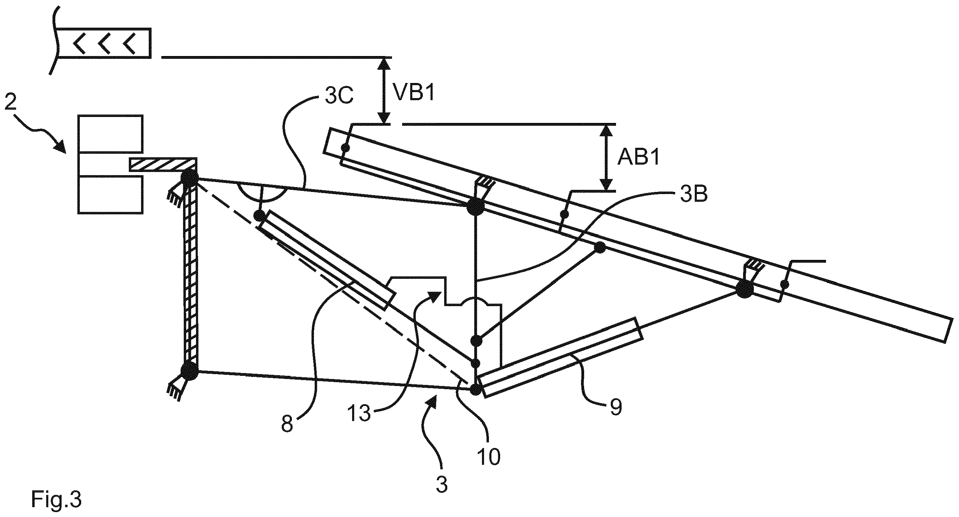

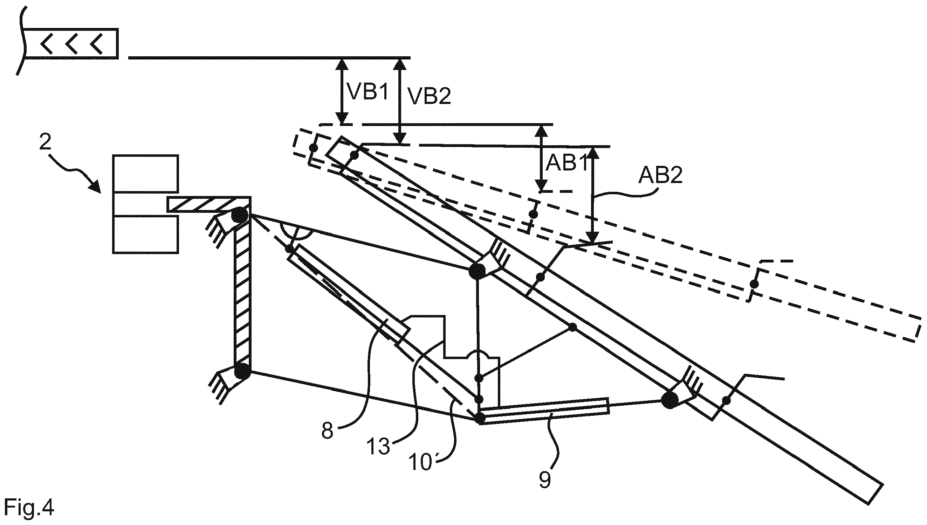

Eine zweite Ausführungsform des Pflugs 1 ist in Fig. 3, 4 in schematischer Ansicht gezeigt. Hierbei zeigt Fig.3 den Pflug 1 gemäß der zweiten Ausführungsform mit verringerter Arbeitsbreite AB1 und Fig.4 erneut denselben Pflug 1 mit vergrößerter Arbeitsbreite AB2 in Volllinien und mit verringerter Arbeitsbreite AB1 in strichlierten Linien zum Vergleich.

Die zweite Ausführungsform des Pflugs 1 unterscheidet sich von der ersten Ausführungsform im Wesentlichen dadurch, dass der Lenker 8 als Hydraulikzylinder ausgeführt ist. Ferner ist der Lenker 8 in dieser zweiten Ausführungsform in Fig. 3, 4 nicht über einen Kniehebel 11 sondern direkt zwischen der Tragschwinge 3C und dem Steuerhebel 3B innerhalb des Viergelenks 3 angeordnet, so dass die Ausrichtung des Viergelenks 3 durch den Lenker 8 beeinflussbar ist. Die Anordnung des als Hydraulikzylinders ausgeführten Lenkers 8 einerseits an der Tragschwinge 3C und andererseits über den Kniehebel 11 an dem Steuerhebel 3B und dem Pflugrahmen 4 ist in einer nicht dargestellten weiteren Ausführungsform allerdings ebenfalls denkbar.

Des Weiteren ist das Stellglied 9 in der zweiten Ausführungsform des Pflugs 1 gemäß Fig. 3, 4 ebenfalls als Hydraulikzylinder ausgeführt. Dies erlaubt es, dass das Stellglied 9 durch eine hydraulische Koppelungsvorrichtung 13 mit dem Lenker 8 verbunden ist. Die hydraulische Koppelungsvorrichtung 13 ist zur automatischen Anpassung der Vorderfurchenbreiteneinstellmittel, also des hier als Hydraulikzylinder ausgebildeten längeneinstellbaren Lenkers 8, bei einer Betätigung der Arbeitsbreiteneinstellmittel, also des ebenfalls als Hydraulikzylinder ausgeführten längeneinstellbaren Stellglieds 9, vorgesehen. Die hydraulische Koppelungsvorrichtung 13 ist hier als Hydraulikleitung ausgeführt und kann zusätzlich zumindest ein Wegeventil, zumindest eine Drossel und/oder zumindest ein Druckbegrenzungsventil aufweisen. Alternativ oder zusätzlich ist denkbar, dass die Koppelungsvorrichtung 13 ein elektronisches Wegmesssystem umfasst, anhand dessen die Länge des Lenkers 8 und/oder des Stellgliedes 9 messbar ist bzw. sind und der Lenker 8 und/oder das Stellglied 9 anhand von dem Wegmesssystem detektierter Messwerte ansteuerbar sind.

Die Koppelungsvorrichtung 13 bildet hierbei eine Master-Slave-Anordnung, wobei der Lenker 8 eine Druckmittelkammer umfasst, die von aus dem Stellglied 9 verdrängtem Hydraulikfluid mittels der Hydraulikleitung der Koppelungsvorrichtung 13 beaufschlagbar ist. Der Lenker 8 ist also als Slave ausgebildet und wird bei Betätigung des als Master ausgebildeten Stellgliedes 9 durch das verdrängte Hydraulikfluid beaufschlagt, so dass sich die Vorderfurchenbreite VB2 automatisch der vergrößerten Arbeitsbreite AB2 anpasst, wie in Fig.4 zu sehen ist. Die durch die Beaufschlagung mit Hydraulikfluid aus dem Stellglied 9 hervorgerufene Längenänderung des Lenkers 8 bewirkt, dass sich die Diagonale 10, 10' des Viergelenks 3 von der in Fig.3 gezeigten Länge der Diagonale 10 auf die in Fig.4 gezeigte Länger der Diagonale 10` streckt. Diese veränderte Ausrichtung, also Streckung, des Viergelenks 3 bewirkt im Wesentlichen die Anpassung der Vorderfurchenbreite VB2 nach der Verschwenkung des Pflugrahmens 4 in die Position vergrößerter Arbeitsbreite AB2 im Wesentlichen mittels des mit dem Viergelenk 3 zusammenwirkenden Stellgliedes 9, gemäß der Volllinien in Fig.4.

Die in der zweiten Ausführungsform des Pflugs 1 als Hydraulikzylinder ausgebildeten Vorderfurchenbreiteneinstellmittel sind ferner mittels eines von der Koppelungsvorrichtung 13 separaten Schaltventils unabhängig von den ebenfalls als Hydraulikzylinder ausgebildeten Arbeitsbreiteneinstellmitteln betätigbar. Mittels dieses separaten Schaltventils kann die Vorderfurchenbreite VB1, VB2 angepasst werden, indem der Lenker 8 auf eine bestimmte Länge verfahren wird, welche mit der gewünschten Vorderfurchenbreite VB1, VB2 korrespondiert.

### Bezugszeichenliste

- 1: Pflug
- F: Fahrtrichtung
- 2: Anbaubock
- 3: Viergelenk
- 3A: Wendekonsole
- 3B: Steuerhebel
- 3C: Tragschwinge
- 3D: Stabilisator
- 4: Pflugrahmen
- 5: Pflugkörper
- 6: Verstellstange
- 7: Gelenk
- 8: Lenker
- 9: Stellglied
- VB1, VB2: Vorderfurchenbreite
- AB1, AB2: Arbeitsbreite
- 10, 10`: Diagonale
- 11: Kniehebel
- 11A: Verbindungsstück
- 11B: Zug-Druck-Stab
- 12: Strebe
- 13: hydraulische Koppelungsvorrichtung

## Patentansprüche

1. Pflug (1), insbesondere Anbaudrehpflug, mit einem Anbaubock (2) zum Anbau an einer Zugmaschine, einem an dem Anbaubock (2) mittels eines als Viergelenk (3) ausgebildeten Einstellzentrums verstellbar angeordneten Pflugrahmen (4) mit daran schwenkbar angeordneten Pflugkörpern (5), einer mit den Pflugkörpern (5) verbundenen zur gemeinsamen einstellbaren Verschwenkung der Pflugkörper (5) vorgesehenen Verstellstange (6), wobei das Viergelenk (3) aus einer mit dem Anbaubock (2) starr verbundenen Wendekonsole (3A), einem der Wendekonsole (3A) gegenüberliegend angeordnetem Steuerhebel (3B), einer jeweils mit einem Gelenk (7) zwischen der Wendekonsole (3A) und dem Steuerhebel (3B) angeordneten Tragschwinge (3C) und einem jeweils mit einem Gelenk (7) zwischen der Wendekonsole (3A) und dem Steuerhebel (3B) angeordneten Stabilisator (3D) besteht, wobei der Pflugrahmen (4) über das die Tragschwinge (3C) mit dem Steuerhebel (3B) verbindende Gelenk (7) an dem Viergelenk (3) angelenkt ist, und mit zumindest einem an dem Viergelenk (3) angreifenden, längeneinstellbaren Lenker (8) zur Einstellung der Vorderfurchenbreite (VB1, VB2) und einem zwischen dem Viergelenk (3) und dem Pflugrahmen (4) angeordnetem als Arbeitsbreiteneinstellmittel ausgebildeten längeneinstellbaren Stellglied (9), wobei die Arbeitsbreiteneinstellmittel anhand des Viergelenks (3) mit den Vorderfurchenbreiteneinstellmitteln verbunden sind, wobei der Lenker (8) innerhalb des Viergelenks (3) zwischen dem Steuerhebel (3B) einerseits und der Tragschwinge (3C)andererseits, die Ausrichtung des Viergelenks (3), insbesondere eine Diagonale (10) des Viergelenks (3), beeinflussend angeordnet ist, **dadurch gekennzeichnet, dass** der Lenker (8) einerseits an der Tragschwinge (3C) angeordnet ist und andererseits über einen Kniehebel (11) mit dem Steuerhebel (3B) und dem Pflugrahmen (4) verbunden ist.

2. Pflug (1) nach Anspruch 1, **dadurch gekennzeichnet, dass** der Lenker (8) als Spannschloss ausgeführt ist.

3. Pflug (1) nach Anspruch 1, **dadurch gekennzeichnet, dass** der Lenker (8) als Hydraulikzylinder ausgeführt ist.

4. Pflug (1) nach Anspruch 3, **dadurch gekennzeichnet, dass** das Stellglied (9) als Hydraulikzylinder ausgeführt ist, dass das Stellglied (9) durch eine hydraulische Koppelungsvorrichtung (13) zur automatischen Anpassung der Vorderfurchenbreiteneinstellmittel bei einer Betätigung der Arbeitsbreiteneinstellmittel mit dem Lenker (8) verbunden ist.

5. Pflug (1) nach Anspruch 4, **dadurch gekennzeichnet, dass** die Koppelungsvorrichtung (13) eine Master-Slave-Anordnung umfasst, wobei der Lenker (8) eine Druckmittelkammer umfasst, die von aus dem Stellglied (9) verdrängtem Hydraulikfluid beaufschlagbar ist.

6. Pflug (1) nach zumindest einem der vorstehenden Ansprüche, **dadurch gekennzeichnet, dass** die Vorderfurchenbreiteneinstellmittel, insbesondere mittels eines, vorzugsweise von der Koppelungsvorrichtung (13) separaten, Schaltventils, unabhängig von den Arbeitsbreiteneinstellmitteln betätigbar sind.

7. Pflug (1) nach zumindest einem der vorstehenden Ansprüche, **dadurch gekennzeichnet, dass** die Verstellstange (6) und der Steuerhebel (3B) durch eine Strebe (12) verbunden sind, dass die Strebe (12) so eine gemeinsame Verschwenkung der Pflugkörper (5) bei Betätigung der Arbeitsbreiteneinstellmittel und/oder Vorderfurchenbreiteneinstellmittel über die Verstellstange (6) bewirkend ausgebildet ist.

8. Pflug (1) nach Anspruch 7, **dadurch gekennzeichnet, dass** die Strebe (12) längeneinstellbar, insbesondere als Spannschloss, ausgeführt ist.

## Claims

1. Plow (1), in particular a mounted reversible plow, comprising a headstock (2) for mounting on a tractor, a plow frame (4), which is arranged on the headstock (2) so as to be adjustable by means of an adjustment center designed as a four-bar linkage (3) and which has plow bodies (5) pivotably arranged thereon, an adjusting rod (6) which is connected to the plow bodies (5) for the joint adjustable pivoting of the plow body (5), the four-bar linkage (3) consisting of a turning bracket (3A) which is rigidly connected to the headstock (2), a control lever (3B) arranged opposite the turning bracket (3A), a support rocker (3C) arranged in each case with a joint (7) between the turning bracket (3A) and the control lever (3B), and a stabilizer (3D) arranged in each case with a joint (7) between the turning bracket (3A) and the control lever (3B), the plow frame (4) being articulated to the four-bar linkage (3) via the joint (7) connecting the support rocker (3C) to the control lever (3B), and comprising at least one length-adjustable link (8), which acts on the four-bar linkage (3), for adjusting the front furrow width (VB1, VB2), and a length-adjustable control element (9) which is arranged between the four-bar linkage (3) and the plough frame (4) and is designed as a working-width adjustment means, the working width adjustment means being connected to the front-furrow-width adjustment means by means of the four-bar linkage (3), the link (8) being arranged within the four-bar linkage (3) between the control lever (3B) on one side and the support rocker (3C) on the other side so as to influence the orientation of the four-bar linkage (3), in particular a diagonal (10) of the four-bar linkage (3), **characterized in that** the link (8) is arranged on the support rocker (3C) on one side and is connected to the control lever (3B) and the plow frame (4) via a toggle lever (11) on the other side.

2. Plow (1) according to claim 1, **characterized in that** the link (8) is designed as a turnbuckle.

3. Plow (1) according to claim 1, **characterized in that** the link (8) is designed as a hydraulic cylinder.

4. Plow (1) according to claim 3, **characterized in that** the control element (9) is designed as a hydraulic cylinder, and **in that** the control element (9) is connected to the link (8) via a hydraulic coupling device (13) for automatically adapting the front-furrow-width adjustment means when the working-width adjustment means are actuated.

5. Plow (1) according to claim 4, **characterized in that** the coupling device (13) comprises a master-slave arrangement, the link (8) comprising a pressure medium chamber which can be supplied with hydraulic fluid displaced from the control element (9).

6. Plow (1) according to at least one of the preceding claims, **characterized in that** the front-furrow-width adjustment means can be actuated independently of the working-width adjustment means, in particular by means of a switching valve which is preferably separate from the coupling device (13).

7. Plow (1) according to at least one of the preceding claims,
**characterized in that** the adjusting rod (6) and the control lever (3B) are connected by a strut (12), and **in that** the strut (12) is thus designed to bring about a joint pivoting of the plow bodies (5) via the adjustment rod (6) when the working-width adjustment means and/or front-furrow-width adjustment means are actuated.

8. Plow (1) according to claim 7, **characterized in that** the strut (12) is designed to be adjustable in length, in particular as a turnbuckle.

## Revendications

1. Charrue (1), en particulier charrue réversible portée, comportant une tête d'attelage (2) pour l'attelage à un tracteur, un cadre de charrue (4) disposé de manière réglable au moyen d'un centre de réglage conçu comme un quadrilatère articulé (3) sur la tête d'attelage (2), comportant des corps de charrue (5) disposés de manière pivotante sur celui-ci, une tige de réglage (6) reliée aux corps de charrue (5) prévue pour le pivotement commun réglable des corps de charrue (5), le quadrilatère articulé (3) étant constitué d'une console de pivotement (3A) reliée rigidement à la tête d'attelage (2), d'un levier de commande (3B) disposé à l'opposé de la console de pivotement (3A), d'une bascule de support (3C) disposée respectivement avec une articulation (7) entre la console de pivotement (3A) et le levier de commande (3B) et d'un stabilisateur (3D) disposé respectivement avec une articulation (7) entre la console de pivotement (3A) et le levier de commande (3B), le cadre de charrue (4) étant articulé au quadrilatère articulé (3) au moyen de l'articulation (7) reliant la bascule de support (3C) au levier de commande (3B) et comportant au moins un guidon (8) réglable en longueur entrant en prise avec le quadrilatère articulé (3) pour le réglage de la largeur de sillons avant (VB1, VB2) et un actionneur (9) réglable en longueur conçu comme un moyen de réglage de largeur de travail disposé entre le quadrilatère articulé (3) et le cadre de charrue (4), les moyens de réglage de largeur de travail étant reliés au moyen du quadrilatère articulé (3) aux moyens de réglage de largeur de sillons avant, le guidon (8) étant disposé à l'intérieur du quadrilatère articulé (3) entre le levier de commande (3B) d'un côté et la bascule de support (3C) de l'autre côté, de manière à influencer l'orientation du quadrilatère articulé (3), en particulier d'une diagonale (10) du quadrilatère articulé (3), **caractérisée en ce que** le guidon (8) est disposé d'un côté sur la bascule de support (3C) et est relié de l'autre côté au moyen d'un levier basculant (11) au levier de commande (3B) et au cadre de charrue (4).

2. Charrue (1) selon la revendication 1, **caractérisée en ce que** le guidon (8) est conçu comme un tendeur.

3. Charrue (1) selon la revendication 1, **caractérisée en ce que** le guidon (8) est conçu comme un cylindre hydraulique.

4. Charrue (1) selon la revendication 3, **caractérisée en ce que** l'actionneur (9) est conçu comme un cylindre hydraulique, que l'actionneur (9) est relié au guidon (8) au moyen d'un dispositif de couplage hydraulique (13) pour l'ajustement automatique des moyens de réglage de largeur de sillons avant lors d'un actionnement des moyens de réglage de largeur de travail.

5. Charrue (1) selon la revendication 4, **caractérisée en ce que** le dispositif de couplage (13) comprend un agencement maître-esclave, le guidon (8) comprenant une chambre à fluide de pression, laquelle peut être alimentée par du fluide hydraulique refoulé hors de l'actionneur (9).

6. Charrue (1) selon au moins l'une des revendications précédentes, **caractérisée en ce que** les moyens de réglage de largeur de sillons avant peuvent être actionnés indépendamment des moyens de réglage de largeur de travail, en particulier au moyen d'une soupape de commutation, de préférence séparée du dispositif de couplage (13).

7. Charrue (1) selon au moins l'une des revendications précédentes, **caractérisée en ce que** la tige de réglage (6) et le levier de commande (3B) sont reliés par une entretoise (12), que l'entretoise (12) est conçue pour ainsi entraîner un pivotement commun des corps de charrue (5) lors de l'actionnement des moyens de réglage de largeur de travail et/ou des moyen de réglage de largeur de sillons avant au moyen de la tige de réglage (6).

8. Charrue (1) selon la revendication 7, **caractérisée en ce que** l'entretoise (12) est conçue réglable en longueur, en particulier comme un tendeur.
